(19) **Europäisches Patentamt**
**European Patent Office**
**Office européen des brevets**

(11) **EP 3 365 154 B1**

(12) **EUROPEAN PATENT SPECIFICATION**

(45) Date of publication and mention
of the grant of the patent:
**28.04.2021 Bulletin 2021/17**

(51) Int Cl.:
*B29C 64/321* (2017.01)   *B29C 64/10* (2017.01)
*B29C 64/153* (2017.01)   *B33Y 10/00* (2015.01)

(21) Application number: **16741141.2**

(86) International application number:
**PCT/IB2016/053563**

(22) Date of filing: **16.06.2016**

(87) International publication number:
**WO 2017/068435 (27.04.2017 Gazette 2017/17)**

(54) **CONTACTLESS MANIPULATION APPARATUS, ASSEMBLY METHOD AND 3D PRINTING**

BERÜHRUNGSLOSE MANIPULATIONSVORRICHTUNG, MONTAGEVERFAHREN UND
3D-DRUCKEN

APPAREIL DE MANIPULATION SANS CONTACT, PROCÉDÉ D'ASSEMBLAGE ET IMPRESSION 3D

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.10.2015 LT 2015088**

(43) Date of publication of application:
**29.08.2018 Bulletin 2018/35**

(73) Proprietor: **UAB "Neurotechnology"
06118 Vilnius (LT)**

(72) Inventor: **PUTKIS, Osvaldas
10254 Vilnius (LT)**

(74) Representative: **Klimaitiene, Otilija
AAA Law
P.O.Box 33
A. Gostauto street 40B
03163 Vilnius (LT)**

(56) References cited:
**WO-A1-2015/110600     US-A- 5 722 479
US-A1- 2016 031 156**

• **"DIY 3D Printing", INTERNET CITATION, 8
January 2014 (2014-01-08), pages 1-7,
XP002739881, Retrieved from the Internet:
URL:http://diy3dprinting.blogspot.nl/2014/
01/ultrasonic-particle-levitation-could-it .html
[retrieved on 2015-05-21]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of invention

This invention relates to 3D printing and particularly printing employing acoustic field based contactless manipulation of materials and components.

Background of the invention

Plastic, glass or metal components, electronic components or integrated electronic circuits are generally manufactured separately using various forming devices, such as automated assembly line or three-dimensional printers. Subsequently, the components are assembled into the final product by hand or automatically. Such assembly of products requires separate production and assembly equipment and assembly process requires additional production time, which results in higher production costs. Contact assembly, at both micro and macro scale, is a complicated process mechanically. Contact assembly techniques for small components are often limited by the electric field forces which prevent the release of the object from a griper. It is complicated to manipulate material with different physical characteristics (geometry, elasticity, etc.) for automated machinery. Said deficiencies can be avoided by using contactless manipulation methods and devices. One application of a three-dimensional acoustic manipulation technology is positioning small-scale objects in three-dimensional space using acoustic levitation. Objects can be transported from one position to another in both, gas and liquid media, and combined, by changing the acoustic field parameters. Acoustic levitation can be adapted to manage a greater range of materials, has higher operational speed and high spatial resolution compared to contact assembly techniques.

There are many known robotic devices for assembling electronics components, such as apparatus for electronic component insertion into predetermined position on a printed circuit board disclosed in US patent No. 4,637,134. However, this device operates as contact manipulator for inserting electronic components into another product produced by other device.

There is a known method of manipulating particles in the gaseous medium in three dimensions using a device comprising two to four planes facing each other made of multitude of ultrasonic transducers (Yoichi Ochiai, Takayuki Hoshi, Jun Rekimoto "Pixie dust: graphics generated by levitated and animated objects in computational acoustic-potential field" ACM Transactions on Graphics (TOG) - Proceedings of ACM SIGGRAPH 2014 TOG, Volume 33 Issue 4, July 2014). Each ultrasonic transducer is operated separately, which allows simultaneous management of several objects in a certain trajectory. Levitating objects can be controlled to form predetermined clusters. However, this method and apparatus are not intended for producing and assembly of three-dimensional products. US patent No. 5,500,493 discloses acoustic levitation device with feedback from multiple sensors in order to maintain a stable and accurate spatial location of the object. However, this device is not suitable to transport components or materials in three-dimensional space for production and assembly of three-dimensional products. Document US 5 722 479 discloses a contactless manipulation apparatus comprising acoustic transducers controlled by a computing unit, wherein the apparatus further comprises at least one device for feeding materials; at least one material melting device; a base to form an object upon; the computing unit; and an acoustic field controlled by the apparatus.

Additional prior art is considered to be disclosed in US patent No. 6,766,691. Said patent discloses method and apparatus for positioning a particle or particle cluster using optical acoustic molding. Using an acoustic transducer and the reflector positioned around the particle or particle cluster standing wave is generated and particles are suspended in air. These standing waves change the shape of the particle cluster by affecting particle surface. Heating beam is used to melt suspended particle cluster to form a solid object. One of said method shortcomings is lack of possibility to join multiple components and/or make a product.

Present invention is designed for making products from different materials and/or components using contactless acoustic manipulation of material and/or components.

Brief description of the invention

The invention is defined by an apparatus in accordance with claim 1 and by a method in accordance with claim 6. Apparatus for contactless manipulation of materials and components, such as electronic components, comprises materials and/or components feed devices; acoustic transducer arrays; at least one material and/or component joining (melting, solidifying or welding) device; base on which an object is formed; optionally a feedback signal generation device; and a computing unit such as a regular desktop computer with a digital data medium storing executable program, which receives and processes signal from feedback device and controls acoustic transducers for generation of the desired acoustic field, for instance, focusing acoustic energy to a specific point in space.

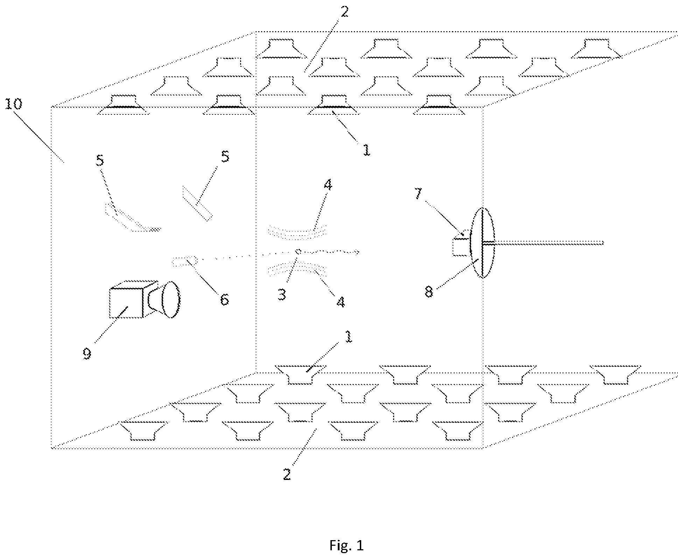

When the transducer arrays are placed opposite to each other, acoustic field with the maximum and minimum (nodes) points is created in the focus area due to interference of waves being emitted from the transducers located at the top and at the bottom arrays (Fig. 1). If acoustic manipulation is performed in the air then manipulated objects are suspended in nodes. The focus position can be changed by changing driving phases and amplitudes of transducers thus making suspended object move to the desired location in space.

## Brief description of drawings

Other features and advantages of the invention are described in detailed description invention of the with reference to the following drawings:

Fig. 1 shows a schematic diagram of contactless printing apparatus;

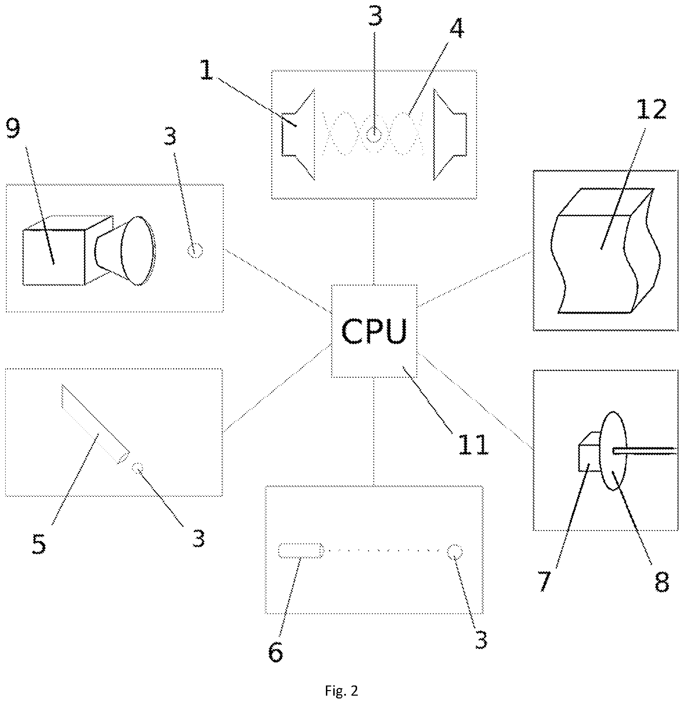

Fig. 2 shows operational links between components of the contactless printing apparatus.

Before providing a detailed description of the invention with references to the embodiment drawings we note that identical elements are indicated by the same number in all of the drawings.

## Detailed description of the invention

It should be understood that numerous specific details are presented in order to provide a complete and comprehensible description of the invention embodiment. However, the person skilled in art will understand that the embodiment examples do not limit the application of the invention which can be implemented without these specific instructions. Well known methods, procedures and components have not been described in detail for the embodiment not to be misleading. Furthermore, this description should not be considered to be constraining the invention to given embodiment examples but only as one of possible implementations of the invention.

Apparatus (10) for contactless manipulation of materials and/or components such as electronic components, comprises materials' (liquid, solid or intermediate state) and/or components' (3) feed devices (5), which deliver materials and/or components into region within the apparatus (10), in which the material and/or component (3) can be trapped by an acoustic field (4); acoustic transducer (1) arrays positioned at least in one plane, wherein said acoustic transducer (1) arrays comprise acoustic transducers (1), arranged in a way as to cover most of the acoustic transducer (1) mounting base (2) area; at least one material and/or component joining (melting, solidifying or welding) device (6) which delivers a large amount of concentrated energy, such as a laser or other electromagnetic radiation emitting device; a base (8) on which an object (7) is formed, wherein said base (8) can be moved so that the object (7) could be held in place and pulled from the acoustic field during formation. The apparatus (10) also may have a feedback device (9), for instance, a camera, to determine position of the transported material, components and other objects, thus ensuring their accurate transportation and positioning, and a computing unit (11), such as a conventional desktop computer comprising a digital data storage medium storing a control program, which is executed by the computing unit (11) in order to receive and process a signal from feedback device (9) and to control the acoustic field (4) within the apparatus (10) by controlling acoustic transducers (1). Data for the apparatus control may be entered manually via common computer data inputs or received from the device scanning an object (12), which will be replicated by the apparatus (10).

One of acoustic manipulation methods is based on focusing arrays of transducers (1) to a desired point in space. Acoustic field amplitude at the point in space can be expressed as superposition of acoustic waves transmitted from each acoustic transducer in transducer array using following equation (approximating transducer as a point source):

$$P(r) = \sum_i A_i \, e^{ikr_i + \phi_i}$$

where $A_i$ is amplitude of the acoustic field generated by transducer in close proximity to the transducer; $r_i$ is the distance from the transducer $i$ to the position in space $r$; $\Phi_i$ is a relative driving phase of the transducer; $k$ is a wave vector within a medium; $P$ is amplitude of the acoustic field; and $r$ is the location in space. Transducer driving phases $\Phi_i$ are chosen such that the acoustic field amplitude $P(r)$ would be maximized at the desired location $r$ in space. Transducer arrays are positioned opposite to each other to create acoustic field with maximum and minimum (node) points in a focus zone due to interference between waves traveling from transducers located in top and in bottom arrays (Fig. 1) being mounted respectively on top and bottom on mounting bases (2). If acoustic manipulation is performed in air, manipulated objects made of the most frequently occurring substances such as liquids, metals, plastics, etc., are suspended in nodes. By changing driving phases of the transducers (1) the focus position can be changed accordingly, making the suspended object move to a desired position in space. It is worth noting that this is only one of possible methods for acoustic manipulation, different transducer arrangement and different transducer driving parameters can be used. Not only phase but also amplitude and/or frequency can be controlled to create different acoustic fields suitable for object suspension in medium and manipulation.

Method for contactless manipulation of materials and/or components, such as electronic components, comprises introducing and suspending material (3) needed for object (7) formation, which may be liquid, solid or amorphous, wherein the material is fed into an acoustic field (4) generated within the apparatus (10) using a feed device (5); subsequent contactless transportation of the material or the component (3) to desired location using acoustic field (4); attaching the material and/or component to the object being formed on a fixed or movable base (8) by melting, solidifying or welding by exposing material and/or component to electromagnetic radiation. The process of material and/or component joining to the object being printed by melting, solidifying or welding can be sequenced and combined to suit specific task, for example so, that liquid material is transported and solidified on a surface of a printed object using ultraviolet radiation, electronic component is transported to the object being printed and welded to it using laser beam; or solid material is fed into ultrasonic field, melted and transported to the object being printed in liquid state and left to solidify on the surface of the object.

During the object (7) formation said movable base (8) can be moved in at least one direction, for instance, a printed layer is pulled from the acoustic field so that next layer can be printed. Accordingly the apparatus (10) can have dimensions smaller than the object (7) being formed, because the whole object would not be placed in between arrays of acoustic transducers (1), but only a part which is being formed.

Other elements such as electronic components (3) can be fed into the apparatus (10) by at least one feed device (5). Such electronic components (3) can be transported within the apparatus (10) using controlled acoustic field (4) to a location where said components (3) are to be attached. One or more components (3) of the same or different material can be transported simultaneously. It is also possible to attach several components at the same time thus speeding-up the printing process.

Acoustic transducer (1) arrays are controlled by a computing unit using a control program being stored in its digital data storage medium. The program is executed so that driving signals being sent to each acoustic transducer (1) could be adjusted (phase, amplitude, frequency) according to the parameters of the material or component being transported and its position within the apparatus (10). In order to ensure accurate transportation of materials (3) and components (3), which can be transported by the apparatus (10) simultaneously or sequentially via independent paths, and accurate manipulation during melting, solidification and joining, the feedback signal can be formed from at least one signal generating device (9) which is used to determine accurate location of the transported materials (3) and components (3) in between the acoustic transducer arrays.

The term "acoustic" defines waves in audible frequency range, ultrasonic waves, and any other elastic waves.

Advantages of the present invention over the closest prior art are: the ability to use several types of materials for printing; printing elements can be SMT components; mixed printing wherein combination of different materials and components is possible; different joining methods are possible; contactless manipulation allows melting materials at high temperatures. Although the present description has listed many characteristics and advantages of the invention and provided structural details and features, the description is given only as an implementation example of the invention. There may be changes in apparatus components, their size and layout, the scope of the invention being defined by the following claims.

## Claims

1. Contactless acoustic manipulation apparatus (10) comprising acoustic transducers (1) and an acoustic field controlled by a computing unit (11) using said acoustic transducers wherein the apparatus (10) comprises the computing unit (11), at least one device (5) for feeding materials and/or components (3); a base (8) to form an object (7) upon; a path of acoustic manipulation essentially extending in front of and along arrays of acoustic transducers (1) positioned at least in one plane and from the at least one device (5) for feeding materials and/or components (3) up to the base (8) to form the object (7) upon, wherein said manipulation comprises any of suspension in air and in nodes, trapping, movement by changing driving phases of the transducers (1) following a predetermined trajectory, and wherein the transducers (1) are arranged to cover most of the acoustic transducer (1) mounting base (2) area; and at least one device (6) for joining, melting, solidifying or welding said materials and/or components (3).

2. Contactless manipulation apparatus (10) according to claim 1, wherein the at least one material and/or component (3) feed device (5) is a feed device for liquid, solid or intermediate state material.

3. Contactless manipulation apparatus (10) according to claim 1, wherein the at least one material or/and component joining, melting, solidifying or welding device (6) is a laser or other electromagnetic radiation emitting device.

4. Contactless manipulation apparatus (10) according to claim 1, further comprising at least one feedback device (9), such as video camera, for generating feedback signal.

5. Contactless manipulation apparatus (10) according to claim 4, wherein digital data storage medium of the computing unit (11) contains executable control program for receiving and processing signal from the at least one feedback device (9) and controlling the acoustic field.

6. Method for making an object using the contactless manipulation apparatus of anyone of claims 1-5, wherein the method comprises simultaneous or sequential delivery of at least one material (3) and/or at least one electropnic component (3) to an acoustic field (4), formed within the contactless manipulation apparatus (10), by at least one feeding device (5); contactless transportation of the material and/or the component (3) using acoustic field (4); application of concentrated energy or other electromagnetic radiation onto said material and/or component for melting, solidifying or welding said material and/or component (3); formation of the solid object (7) on a base (8).

7. Method according to claim 6, wherein the at least one acoustic transducer (1) array is controlled by the computing unit (11) executable control program, stored in digital data storage medium of the computing unit (11) and executed by the computing unit (11), taking into account data received from the at least one feedback device (9).

**Patentansprüche**

1. Kontaktlose akustische Manipulationseinrichtung (10), umfassend akustische Wandler (1) und ein akustisches Feld, das von einer Recheneinheit (11) unter Verwendung der akustischen Wandler gesteuert wird, wobei die Einrichtung (10) die Recheneinheit (11), mindestens eine Vorrichtung (5) zum Zuführen von Materialien und/oder Komponenten (3); eine Basis (8) zur Bildung eines Objekts (7) auf dieser; einen akustischen Manipulationspfad, der sich im Wesentlichen vor und entlang Gruppen von akustischen Wandlern (1), die mindestens in einer Ebene angeordnet sind, und von der mindestens einen Vorrichtung (5) zum Zuführen von Materialien und /oder Komponenten (3) bis zu der Basis (8) zur Bildung des Objekts (7) darauf erstreckt, wobei die Manipulation eines von Suspension in Luft und in Knoten, Einfangen, Bewegung durch Ändern von Antriebsphasen der Wandler (1), die einer vorbestimmten Bahn folgen, umfasst und wobei die Wandler (1) angeordnet sind, den Großteil der Fläche einer Montagebasis (2) des akustischen Wandlers (1) zu bedecken; und mindestens eine Vorrichtung (6) zum Verbinden, Verschmelzen, Verfestigen oder Schweißen der Materialien und/oder Komponenten (3) umfasst.

2. Kontaktlose Manipulationseinrichtung (10) nach Anspruch 1, wobei die mindestens eine Zufuhrvorrichtung (5) des Materials und/oder der Komponente (3) eine Zufuhrvorrichtung für Material im flüssigen, festen oder Zwischenzustand ist.

3. Kontaktlose Manipulationseinrichtung (10) nach Anspruch 1, wobei die mindestens eine Vorrichtung (6) zum Verbinden, Verschmelzen, Verfestigen oder Schweißen des Materials und/oder der Komponente eine Laser- oder andere elektromagnetische Strahlung aussendende Vorrichtung ist.

4. Kontaktlose Manipulationseinrichtung (10) nach Anspruch 1, weiter umfassend mindestens eine Feedbackvorrichtung (9), wie Videokamera, zum Erzeugen von Feedbacksignal.

5. Kontaktlose Manipulationseinrichtung (10) nach Anspruch 4, wobei Digitaldatenspeichermedium der Recheneinheit (11) ausführbares Steuerprogramm zum Empfangen und Verarbeiten von Signal von der mindestens einen Feedbackvorrichtung (9) und Steuern des akustischen Felds enthält.

6. Verfahren zum Herstellen eines Objekts unter Verwendung der kontaktlosen Manipulationseinrichtung nach einem der Ansprüche 1-5, wobei das Verfahren gleichzeitiges oder aufeinanderfolgendes Abgeben mindestens eines Materials (3) und/oder mindestens einer elektronischen Komponente (3) an ein akustisches Feld (4), das in der kontaktlosen Manipulationseinrichtung (10) gebildet ist, durch mindestens eine Zufuhrvorrichtung (5); kontaktloses Transportieren des Materials und/oder der Komponente (3) unter Verwendung des akustischen Felds (4); Anwenden konzentrierter Energie oder anderer elektromagnetischer Strahlung an dem Material und/oder der Komponente zum Verschmelzen, Verfestigen oder Schweißen des Materials und/oder der Komponente (3); Bilden des festen Objekts (7) auf einer Basis (8) umfasst.

7. Verfahren nach Anspruch 6, wobei die mindestens eine akustische Wandler- (1) Gruppe durch das ausführbare Steuerprogramm von Recheneinheit (11) gesteuert wird, das in Digitaldatenspeichermedium der Recheneinheit (11) gespeichert ist und von der Recheneinheit (11) unter Berücksichtigung von Daten ausgeführt wird, die von der mindestens einen Feedbackvorrichtung (9) empfangen werden.

**Revendications**

1. Appareil de manipulation acoustique sans contact (10) comprenant des transducteurs acoustiques (1) et un champ acoustique contrôlé par une unité de calcul (11) au moyen desdits transducteurs acoustiques, dans lequel
l'appareil (10) comprend l'unité de calcul (11), au moins un dispositif (5) d'alimentation en matériaux et/ou composants (3) ; une base (8) sur laquelle un objet (7) est formé ; un trajet de manipulation acoustique s'étendant essentiellement en face et le long de réseaux de transducteurs acoustiques (1) positionnés au moins dans un plan et de l'au moins un dispositif (5) d'alimentation en matériaux et/ou composants (3) jusqu'à la base (8) sur laquelle l'objet (7) est formé, dans lequel ladite manipulation comprend l'un quelconque d'une suspension dans l'air et dans des nœuds, d'un piégeage, d'un mouvement par modification de phases d'entraînement des transducteurs (1) suivant une trajectoire prédéterminée, et dans lequel les transducteurs (1) sont agencés pour couvrir la plus grande partie de la zone de la base de montage (2) des transducteurs acoustiques (1); et au moins un dispositif (6) pour l'assemblage, la fusion, la solidification ou le soudage desdits matériaux et/ou composants (3).

**2.** Appareil de manipulation sans contact (10) selon la revendication 1, dans lequel l'au moins un dispositif d'alimentation en matériaux et/ou composants (3) est un dispositif d'alimentation pour matériau liquide, solide ou à l'état intermédiaire.

**3.** Appareil de manipulation sans contact (10) selon la revendication 1, dans lequel l'au moins un dispositif d'assemblage, de fusion, de solidification ou de soudage de matériaux et/ou de composants (6) est un laser ou autre dispositif d'émission de rayonnement électromagnétique.

**4.** Appareil de manipulation sans contact (10) selon la revendication 1, comprenant en outre au moins un dispositif de rétroaction (9), tel qu'une caméra vidéo, destiné à générer un signal de rétroaction.

**5.** Appareil de manipulation sans contact (10) selon la revendication 4, dans lequel un milieu de stockage de données numériques de l'unité de calcul (11) contient un programme de contrôle exécutable destiné à recevoir et traiter un signal provenant de l'au moins un dispositif de rétroaction (9) et à contrôler le champ acoustique.

**6.** Procédé de fabrication d'un objet au moyen de l'appareil de manipulation sans contact de l'une quelconque des revendications 1-5, dans lequel le procédé comprend la distribution simultanée ou séquentielle d'au moins un matériau (3) et/ou d'au moins un composant électronique (3) à un champ acoustique (4), formé à l'intérieur de l'appareil de manipulation sans contact (10), par au moins un dispositif d'alimentation (5) ; le transport sans contact du matériau et/ou du composant (3) au moyen du champ acoustique (4) ; l'application d'énergie concentrée ou d'un autre rayonnement électromagnétique sur ledit matériau et/ou composant pour fusion, solidification ou soudage dudit matériau et/ou composant (3) ; la formation de l'objet solide (7) sur une base (8).

**7.** Procédé selon la revendication 6, dans lequel l'au moins un réseau de transducteurs acoustiques (1) est contrôlé par le programme de contrôle exécutable par l'unité de calcul (11), stocké dans un milieu de stockage de données numériques de l'unité de calcul (11) et exécuté par l'unité de calcul (11), en prenant en compte les données reçues à partir de l'au moins un dispositif de rétroaction (9).

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4637134 A
- US 5500493 A
- US 5722479 A
- US 6766691 B

**Non-patent literature cited in the description**

- **YOICHI OCHIAI ; TAKAYUKI HOSHI ; JUN REKI-MOTO.** Pixie dust: graphics generated by levitated and animated objects in computational acoustic-potential field. *ACM Transactions on Graphics (TOG) - Proceedings of ACM SIGGRAPH 2014 TOG,* July 2014, vol. 33 (4